# EUROPÄISCHE PATENTSCHRIFT

(11) **EP 2 488 393 B1**
(45) Veröffentlichungstag und Bekanntmachung des Hinweises auf die Patenterteilung: **11.12.2013**
(21) Anmeldenummer: 10776550.5
(22) Anmeldetag: 15.10.2010
(51) Int. Cl.: B60R 13/02, B60J 5/04

(54) **VERKLEIDUNG EINES FAHRZEUGTEILS**
TRIM FOR A VEHICLE PART
GARNITURE POUR UN ÉLÉMENT DE VÉHICULE

(30) Priorität: 15.10.2009 DE 102009049631
(43) Veröffentlichungstag der Anmeldung: 22.08.2012
(73) Patentinhaber: Johnson Controls Interiors GmbH & Co. KG, 47929 Grefrath (DE)
(72) Erfinder: WEBER, Robert, 47807 Krefeld (DE); PURSCHE, Carsten, 85095 Denkendorf Bitz (DE); BUDKE, Josef, 47802 Krefeld (DE); WELZ, Michael, 41334 Nettetal (DE)
(74) Vertreter: Brosch, Oliver
(86) Internationale Anmeldenummer: PCT/EP2010/006312
(87) Internationale Veröffentlichungsnummer: WO 2011/045074

(56) Entgegenhaltungen:
- WO-A1-2007/111782
- DE-A1- 3 441 176
- DE-A1- 10 245 739
- US-A- 5 868 455

## Beschreibung

Die vorliegende Erfindung betrifft ein Verfahren zur Herstellung einer Verkleidung eines Fahrzeugteils mit einem Grundkörper, der eine Ausnehmung und eine Verstärkung aufweist.

Eine derartige verkleidung weitere Verkleidungen ist z.B. aus der DE 10245739 A bekannt finden insbesondere im Bereich der Innenausstattung eines Fahrzeuges Anwendungen und sind beispielsweise aus der DE 10 2007 050 398 A1, der DE 100 64 680 A1, der DE 195 01 292 A1 sowie der DE 101 20 099 C1 bekannt. Die dort beschriebenen Verkleidungsteile sind jedoch vergleichsweise aufwendig gestaltet bzw. vergleichsweise aufwendig herzustellen.

Es war deshalb die Aufgabe der vorliegenden Erfindung eine Verkleidung eines Fahrzeugteils zur Verfügung zu stellen, die die Nachteile des Standes der Technik nicht aufweist.

Gelöst wird die Aufgabe mit einem Verfahren gemäß dem unabhängigen Anspruch 1.

Die vorliegende Erfindung betrifft die Verkleidung eines Fahrzeugteils. Derartige Verkleidungen befinden sich insbesondere im Innenraum des Fahrzeugs. Beispielweise handelt es sich um eine Karosserieverkleidung, insbesondere eine Türverkleidung. Eine Verkleidung im Sinne der Erfindung ist jedoch auch das Armaturenbrett.

Derartige Verkleidungen werden heute in der Regel aus Kunststoff und/oder einem Naturfasermaterial hergestellt und sind dreidimensional geformt. Dieses Formen kann beispielsweise durch Pressen von planen Materialplatten erfolgen. Alternativ jedoch vorstellbar die Verkleidung in einem Gieß-, Spritzgieß- oder Spritzverfahren herzustellen.

Erfindungsgemäß weist der Grundkörper eine Verstärkung auf, die dazu dient den Grundkörper lokal zu verstärken. Bei der Verstärkung handelt es sich um ein separates Bauteil. Diese Verstärkung kann beispielsweise im Bereich einer Ausnehmung, beispielsweise für Lautsprecher, Kartentaschen oder dergleichen, angeordnet sein. Alternativ oder zusätzlich ist vorstellbar, dass an diesem Grundkörper Aggregate insbesondere elektrische Aggregate wie beispielsweise Fensterheber oder Teile eines Infotainementsystems angeordnet sind. Vorzugsweise können die Verstärkungen auch in diesen Bereichen angeordnet sein.

Erfindungsgemäß ist nun vorgesehen, dass der Grundkörper und die Verstärkung aus demselben Material gefertigt sind. Vorzugsweise wird die Verstärkung kraft-form- und/oder stoffschlüssig mit dem Grundkörper verbunden. Ganz besonders bevorzugt werden der Grundkörper und die Verstärkung miteinander verpresst, so dass sich dadurch ein Form-Kraft- und/oder Stoffschluss ergibt. Am meisten bevorzugt werden sowohl die Platte für den Grundkörper als auf die Verstärkung gemeinsam in eine Form eingelegt und dort gemeinsam in ihre abschließende Form gepresst.

Erfindungsgemäß weist der Grundkörper eine Ausnehmung auf, die aus dem Grundkörper herausgearbeitet, beispielsweise ausgestanzt, wird. Dieses Material wird zur Herstellung der Verstärkung verwendet. Die Verstärkung besteht folglich aus von dem Grundkörper entnommenem Material.

Vorzugsweise liegt die Verstärkung zumindest teilweise flächig auf dem Grundkörper auf. Diese flächige Verstärkung weist jedoch vorzugsweise Strukturen insbesondere dreidimensionale Strukturen auf, die ihre mechanische Stabilität verbessern. Derartige Strukturen können Rippen oder dergleichen sein.

In einer weiteren bevorzugten Ausführungsform sind die Verstärkungen zumindest abschnittsweise senkrecht zu dem Grundkörper ausgerichtet und verbessern ebenfalls lokal die mechanische Stabilität des Grundkörpers.

Die zu der Verkleidung gemachten Ausführungen gelten für das erfindungsgemäße Verfahren.

Vorzugsweise wird die Verstärkung mit dem Grundkörper verbunden vorzugsweise verpresst.

Gemäß einer weiteren bevorzugten Ausführungsform des erfindungsgemäßen Verfahrens wird das Material der Verstärkung vor dem Verbinden bearbeitet vorzugsweise geformt. Eine derartige Formung kann darin bestehen, dass die äußere Kontur der Verstärkung beispielsweise durch Schneiden oder sonstige spannabhebende Verfahren verändert wird. Verformen im Sinne dieser bevorzugten Ausführungsform bedeutet jedoch ebenfalls, dass das Material der Verstärkung vor dem Verbinden, beispielsweise durch Anwendung von Kraft und/oder Wärme umgeformt wird.

Im Folgenden wird die Erfindung anhand der Figuren 1 bis 2 erläutert. Diese Erläuterungen sind lediglich beispielhaft und schränken den allgemeinen Erfindungsgedanken nicht ein. Diese Erläuterungen gelten für die erfindungsgemäße Verkleidung und das erfindungsgemäße Verfahren gleichermaßen.
- **Figur 1**: zeigt eine erste Ausführungsform der erfindungsgemäßen Verkleidung.
- **Figur 2**: zeigt eine weitere Ausführungsform der erfindungsgemäßen Verkleidung.

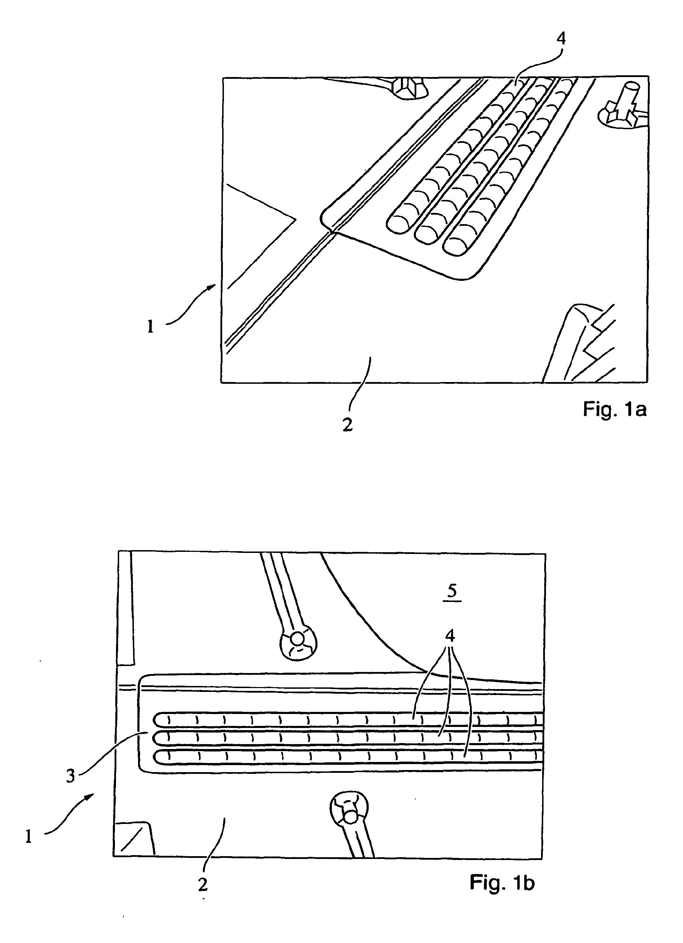

In den Figuren 1a und 1b ist eine erfindungsgemäße Türverkleidung 1 in einer ersten Ausführungsform dargestellt. Diese Verkleidung weist ein Grundkörper 2 auf, der mit einer Verstärkung 3 versehen ist. Der Grundkörper und die Verstärkung bestehen hier aus einem Naturfasermaterial. Der Grundkörper wurde in seine dargestellte dreidimensionale Form umgeformt, beispielsweise gepresst. Bei der Verstärkung 3 handelt es sich um dasselbe Material, aus dem auch der Grundkörper 2 gefertigt ist. Vorzugsweise handelt es sich bei dem Material der Verstärkung 3 um Material, das vorher aus dem Grundkörper 2 entnommen, beispielsweise ausgestanzt wurde. Das Ausstanzen des Materials kann beim Umformen erfolgen. Dadurch wird Material eingespart und Abfall vermindert. Der Fachmann versteht, dass obwohl die Grundplatte und die Verstärkung aus demselben Material bestehen, die Verstärkung aus Material bestehen kann, dass bei der Herstellung einer vorher hergestellten Verkleidung angefallen ist.

Vor der Verbindung der Verstärkung 3 mit dem Grundkörper 2 wurden in diese die Struktur 4, hier drei Verstärkungsrippen, eingeformt, um deren mechanische Stabilität, insbesondere Biegesteifigkeit zu erhöhen.

Das Teil gemäß Figur 1a ist noch einmal in Figur 1b dargestellt. Die Verbindung zwischen dem Grundkörper 2 und der Verstärkung 3 erfolgt durch Verpressen. Dadurch entsteht ein Kraft-,Form.- oder Stoffschluss.

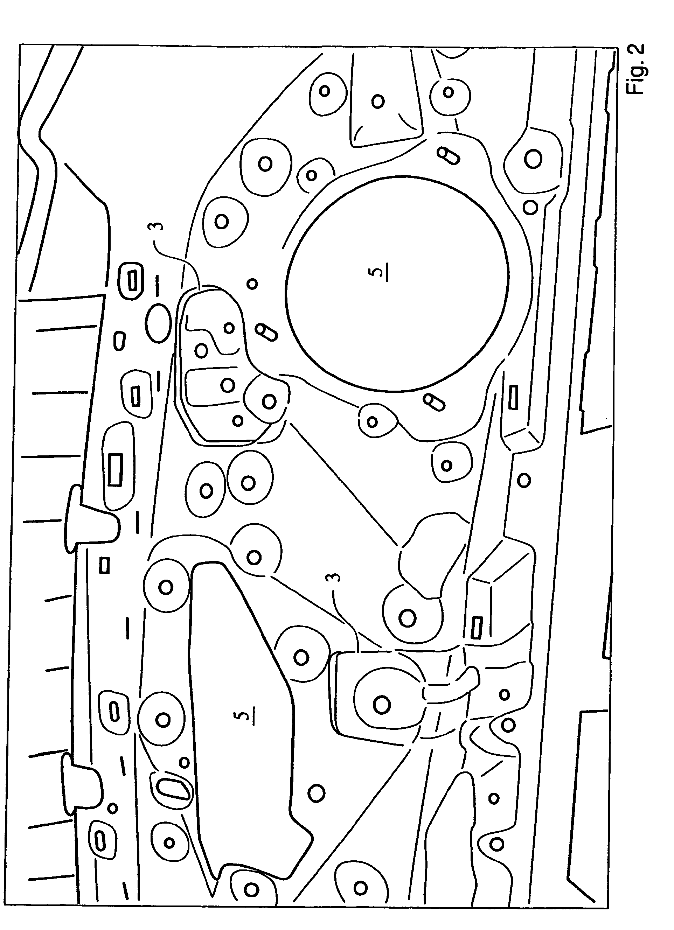

In Figur 2 ist eine weitere Türverkleidung dargestellt. Auch diese weist Ausnehmungen 5 und Verstärkungen 3 auf. Die Ausnehmungen 5 sind in den Grundkörper 2 eingearbeitet, hier eingestanzt, worden. Die Verstärkung 3 ist in dem vorliegenden Fall teilweise flächig und weist einen Ring auf, der senkrecht zu der Ebene des Grundkörpers 2 steht, um wiederum die mechanische Stabilität, insbesondere gegen Biegung, der erfindungsgemäßen Verkleidung zu erhöhen.

Der Fachmann erkennt, dass die Verstärkungen an beiden Seiten des Grundkörpers angeordnet sein können. Der Fachmann versteht des Weiteren, dass die Verstärkung, nachdem sie an dem Grundkörper angeordnet worden ist, einer weiteren Bearbeitung, beispielsweise eine spannabhebende Bearbeitung, unterzogen werden kann.

Des Weiteren erkennt der Fachmann, dass die Verkleidung auf der der Fahrgastzelle abgewandten Seite mit einer wasserabweisenden Beschichtung und auf der der Fahrgastzelle zugewandten Weise mit einer Dekorschicht beschichtet sein kann. Außerdem können auch noch Schaumschichten und dergleichen auf der Verkleidung angeordnet sein.

### Bezugszeichenliste:

- 1: Verkleidung
- 2: Grundkörper
- 3: Verstärkung
- 4: Struktur
- 5: Ausnehmungen

## Patentansprüche

1. Verfahren zur Herstellung einer Verkleidung (1) eines Fahrzeugteils, mit einem Grundkörper (2), der eine Ausnehmung (5) und einer Verstärkung (3) aufweist, **dadurch gekennzeichnet, dass** die Ausnehmung (5) in den Grundkörper eingearbeitet und das dabei gewonnene Material zur Herstellung der Verstärkung (3) eingesetzt wird.

2. Verfahren nach Anspruch 1, **dadurch gekennzeichnet, dass** die Verstärkung (3) mit dem Grundkörper verbunden, vorzugsweise verpresst wird.

3. Verfahren nach Anspruch 2, **dadurch gekennzeichnet, dass** das Material der Verstärkung vor dem Verbinden bearbeitet, vorzugsweise geformt wird.

## Claims

1. Method for producing a lining (1) of a vehicle part having a main body (2) which comprises a recess (5) and a reinforcement (3), **characterized in that** the recess (5) is incorporated in the main body and that the material obtained thereby is used for producing the reinforcement (3).

2. Method according to Claim 1, **characterized in that** the reinforcement (3) is connected, preferably pressed, to the main body.

3. Method according to Claim 2, **characterized in that** the material of the reinforcement is processed, preferably formed, before being connected.

## Revendications

1. Procédé de fabrication d'une garniture (1) pour un élément de véhicule, comportant un corps de base (2) qui comprend un évidement (5) et un renforcement (3), **caractérisé en ce que** l'évidement (5) est incorporé dans le corps de base et le matériau ainsi obtenu est utilisé pour la fabrication du renforcement (3).

2. Procédé selon la revendication 1, **caractérisé en ce que** le renforcement (3) est relié au corps de base, de préférence pressé sur ce dernier.

3. Procédé selon la revendication 2, **caractérisé en ce que** le matériau du renforcement est traité, de préférence façonné, avant la liaison.
